# EUROPÄISCHE PATENTSCHRIFT

(11) **EP 2 268 947 B1**
(45) Veröffentlichungstag und Bekanntmachung des Hinweises auf die Patenterteilung: **16.10.2013**
(21) Anmeldenummer: 09735033.4
(22) Anmeldetag: 03.04.2009
(51) Int. Cl.: F16K 3/26, F16K 5/02

(54) **PROBE-ENTNAHMEVENTIL**
SAMPLE EXTRACTION VALVE
SOUPAPE DE PRÉLÈVEMENT D'ÉCHANTILLON

(30) Priorität: 21.04.2008 DE 102008019982
(43) Veröffentlichungstag der Anmeldung: 05.01.2011
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen
(86) Internationale Anmeldenummer: PCT/DE2009/000466
(87) Internationale Veröffentlichungsnummer: WO 2009/129770

(56) Entgegenhaltungen:
- WO-A-2007/093612
- FR-A- 390 284
- GB-A- 191 306 181
- GB-A- 191 501 388
- NL-A- 7 008 285
- US-A- 1 406 191
- US-A- 1 841 050
- US-A- 2 926 884
- US-A- 2 987 295
- US-A- 3 044 493
- US-A- 3 383 088
- US-A1- 2008 035 225

## Beschreibung

Die Erfindung betrifft ein Probe-Entnahmeventil mit einem Ventilkörper, der in einem Ventilgehäuse zwischen einer Schließstellung und einer Öffnungsstellung des Probe-Entnahmeventils bewegbar ist, wobei in der Öffnungsstellung eine Probe einer Flüssigkeit beispielsweise aus einer die Flüssigkeit führenden Leitung oder aus einem die Flüssigkeit enthaltenden Behälter entnommen wird.

Auf vielen Gebieten ist es erforderlich, Proben der verwendeten Flüssigkeiten zu entnehmen und die Proben auf ihren Zustand zu untersuchen. Als Beispiele seien die Nahrungsmittelverarbeitung, die Pharmazie oder medizinische Bereiche wie z.B. die Dialyse genannt, bei der es eminent wichtig ist, dass das verwendete Wasser keimfrei ist. Häufig ist die zu untersuchende Flüssigkeit Wasser, ohne dass die Erfindung hierauf beschränkt ist.

Üblicherweise werden die Proben durch Entnahmeventile aus einer Leitung oder einem Behälter entnommen, wobei aber die bisher bekannten Ventile den Nachteil haben, dass sie die entnommene Probe verunreinigen können. Dies kann durch einen Totraum im Ventilkörper geschehen, in dem sich Keime ansammeln können, wobei aber ein hauptsächlicher Nachteil der bisherigen Ventile darin besteht, dass ihr Auslaufkanal bei oder nach der Probeentnahme nicht vollständig leer läuft. An der Wand des Auslaufkanals der bisher bekannten Ventile bleiben Tropfen zurück, die die Ursache für eine Kontamination der nächsten zu entnehmenden Probe sein können oder auch eine Rückkontamination der Ursprungsflüssigkeit verursachen können.

Die GB 01388 offenbart ein Absperrglied mit einem konischen Innenraum, wobei durch Drehen des Absperrglieds um seine Längsachse der Durchfluss eines Mediums durch eine Leitung durch ein Fenster den Absperrglieds hindurch versperrt werden kann. Ein ähnliches Absperrglied offenbart die FR 390 284 A. Derartige Ventile sind nicht dazu geeignet, eine Probe einer wässrigen Flüssigkeit aus einem Flüssigkeitsstrom zu entnehmen.

Die GB 06 181 offenbart Ventile für Flüssigkeitsleitungen mit einer konischen Bohrung, die an dem breitesten Ende zylindrisch ist. Die US 2008/035225 befasst sich mit einer Fluidfluss-Steuervorrichtung mit einem Absperrglied mit einem im wesentlichen zylindrischen Innenraum.

Der vorliegenden Erfindung liegt die Aufgabe zugrunde, ein Probe-Entnahmeventil anzugeben, bei dem die oben erwähnten Nachteile weitestgehend vermieden sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass der Ventilkörper eine Auslaufbohrung aufweist, in die eine Querbohrung des Ventilkörpers einmündet, durch die eine zu entnehmende Probe der wässrigen Flüssigkeit eintreten kann und die sich von der Einmündung der Querbohrung an kontinuierlich bis zu dem freien Ende des Ventilkörpers hin erweitert, wobei der untere Rand der Auslaufbohrung zu dem freien Ende hin nach unten abfallend verläuft.

Die Auslaufbohrung erweitet sich damit zu dem freien Ende des Ventilkörpers hin ohne sprunghafte Änderung der Kontur, wobei die Auslaufbohrung bevorzugt eine kreisförmige Querschnittsform hat. Es liegt aber beispielsweise auch eine ovale Querschnittsform im Rahmen der Erfindung.

Am meisten bevorzugt ist, dass die Auslaufbohrung sich bis zu dem freien Ende hin trichterförmig oder trompetenförmig erstreckt.

Während an der Wand einer zylindrischen Auslaufbohrung stets Wassertropfen hängen bleiben, hat sich überraschenderweise gezeigt, dass die erfindungsgemäß ausgebildete Auslaufbohrung bei bzw. nach der Probeentnahme leer läuft. Ursache ist, dass das Gleichgewicht zwischen der Adhäsion zur Wand hin und der Kohäsion des Wassers und dessen Masse durch die stetige Durchmesserzunahme so instabil wird, dass die Auslaufbohrung leerläuft. Dieser durch die besondere Gestaltung erreichte Effekt kann durch Oberflächenmaßnahmen wie z.B. Nanobeschichtung verstärkt werden. In dem erfindungsgemäß ausgestalteten Ventilkörper ist dieser Effekt zu beobachten, ohne dass die Wand der Auslaufbohrung besonders behandelt ist, wobei der Ventilkörper beispielsweise aus PVDF, PE, PP oder nicht-rostendem Stahl besteht.

Gemäß der Erfindung muss der untere Rand der Auslaufbohrung im Winkel zur Horizontalen zu dem freien Ende hin nach unten verlaufen, damit die entnommene Probe durch die Auslaufbohrung z.B. in einen sterilen Beutel abläuft und verbliebene Tropfen von der Wand der Auslaufbohrung abperlen und aus dieser austreten können. Bevorzugt ist dabei, dass die Längsmittelachse der Auslaufbohrung des Ventilkörpers in dessen Einbaulage im wesentlichen horizontal oder besser schräg nach unten verläuft.

Da bei dem erfindungsgemäßen Probeentnahmeventil nach der Probeentnahme keine Tropfen in der Auslaufbohrung verbleiben, ist eine bisher häufig anzutreffende Kontaminationsquelle für eine entnommene Probe beseitigt. Dabei liegt es im Rahmen der Erfindung, dass das erfindungsgemäße Probe-Entnahmeventil vor oder nach der Probeentnahme zusätzlich gespült und/oder sterilisiert werden kann, was auf weiter unten beschriebene Weise vorzugsweise mit Hilfe eines Adapters und eines Kupplungsstücks auf besonders einfache Weise erfolgen kann. Die Auslaufbohrung kann auch mit Hilfe eines Bunsenbrenners, wie er in der Mikrobiologie eingesetzt wird, abgeflammt werden, wobei die Flamme auch den hintersten Bereich der konischen Auslaufbohrung erreicht, was bei einer zylindrischen Auslaufbohrung nicht der Fall wäre.

In weiterer Ausgestaltung der Erfindung ist vorgesehen, dass die vorzugsweise konische Auslaufbohrung in dem Ventilkörper bis zu einer Querbohrung verläuft, in die die Auslaufbohrung einmündet, wobei die Querbohrung sich durch einen bevorzugt konischen Endabschnitt des Ventilkörpers erstreckt, der in der geschlossenen Position des Ventils fest an dem einen Ventilsitz bildenden, umgebenden Bereich des Ventilgehäuses anliegt. Dabei können auch zwei oder mehr Querbohrungen vorgesehen sein, in die im Öffnungszustand des Entnahmeventils die zu entnehmende Flüssigkeit eintritt und in die Auslaufbohrung gelangt. Bevorzugt verlaufen zwei Querbohrungen in der Schließstellung des Ventils mit einer Neigung nach unten auf die Verbindungsstelle mit der Auslaufbohrung zu, damit in den Querbohrungen nach Schließen des Ventils keine Flüssigkeit zurück bleibt.

Die Schließstellung des Ventilkörpers ist bevorzugt dadurch definiert, dass der Ventilkörper z.B. mit einer Rastnase leicht lösbar in das Gehäuse einrastet.

In einer Ausführungsform der Erfindung steht der Ventilkörper im Gewindeeingriff mit dem Gehäuse und wird dadurch zwischen der Offnungsstellung und der Schließstellung bewegt, dass der Ventilkörper mittels eines bevorzugt angeformten Drehgriffs in dem Ventilgehäuse gedreht wird, wodurch sich der Ventilkörper in dem Ventilgehäuse vorwärts oder rückwärts bewegt.

In einer anderen Ausführungsform der Erfindung sitzt der Ventilkörper nicht-drehbar, jedoch längsverschieblich in dem Ventilgehäuse, wobei eine Uberwurfmutter im Gewindeeingriff mit dem Ventilgehäuse steht und bei ihrer Drehung den Ventilkörper in der zugehörigen Längsrichtung mitnimmt. Die Uberwurfmutter ist dabei gegenüber dem Ventilkörper drehbar angeordnet, jedoch in Längsrichtung mit dem Ventilkörper zur gemeinsamen Bewegung gekoppelt.

Das Ventilgehäuse kann mit einem Außengewinde versehen sein, mit dem es in eine Gewindebohrung in der Wand einer eine Flüssigkeit führenden Leitung oder in eine Gewindebohrung eines die Flüssigkeit enthaltenden Behälters einschraubbar ist, wobei dies leckagefrei erfolgt.

In einer anderen Ausgestaltung der Erfindung ist das Ventilgehäuse in eine die Flüssigkeit führende Leitung integriert oder durch einen blockförmigen Leitungsabschnitt gebildet, wobei der blockförmige Leitungsabschnitt weitere Funktionen beinhalten kann.

In weiterer Ausgestaltung der Erfindung kann ein Adapter vorgesehen sein, der vorzugsweise im wesentlichen formschlüssig in die Auslaufbohrung einsetzbar ist, und der eine Durchgangsbohrung enthält, die mit einer Probe-Anschlussleitung verbindbar ist. Die Probe-Anschlussleitung kann dabei z.B. in einen Probe-Behälter führen, der die entnommene Probe aufnimmt.

In diesem Zusammenhang wird betont, dass die Probe-Entnahme auch ohne diesen Adapter erfolgen kann, indem die entnommene Probe aus der Auslaufbohrung des Ventilkörpers in einen darunter angeordneten Behälter läuft.

Wenn der oben erwähnte Adapter eingesetzt wird, wird dieser zweckmäßigerweise in der in die Auslaufbohrung eingesetzten Lage durch ein Kupplungsstück an dem Ventilkörper befestigt, das z.B. durch eine U-förmige Klammer in einer umlaufenden Nut des Ventilkörpers leicht lösbar befestigt sein kann. Dieses Kupplungsstück kann mit einem Spülanschluss versehen sein, der mit einem Ringspalt in Verbindung steht, der zwischen der Auslaufbohrung und dem Adapter verbleibt.

Bei dieser Ausgestaltung der Erfindung kann ein Spülvorgang oder Sterilisierungsvorgang des Entnahmeventils auf einfache Weise dadurch erfolgen, dass eine Spül- oder Sterilisierungsflüssigkeit durch die Durchgangsbohrung des Adapters in die Auslaufbohrung eingeführt wird, durch den Ringspalt zwischen der Auslaufbohrung und dem Adapter zum Spülanschluss-Rohrstutzen des Kupplungsstücks zurück läuft und von dort durch einen angeschlossenen Schlauch in einen Behälter abläuft. Die Spülflüssigkeit bzw. Desinfektionsflüssigkeit wird vorzugsweise aus einem Faltenbalg-Behälter zugeführt, bei dessen Zusammendrücken der erforderliche Druck zum Zuführen der Flüssigkeit in den Ventilkörper hervor gerufen wird.

Das erfindungsgemäße Probe-Entnahmeventil zeichnet sich dadurch aus, dass in der sich vorzugsweise konisch zu dem freien Ende hin erweiternden Auslaufbohrung nach der Probeentnahme sehr viel weniger Flüssigkeit zurück bleibt als dies beim Stand der Technik der Fall ist. Das Entnahmeventil ist bei schrägem Verlauf der Quer- oder Längsbohrungen totraumfrei und spaltfrei, wobei das Ventil zudem keinen Strömungswiderstand bildet. Das Ventil ist leicht austauschbar und läuft zur Probeentnahmeseite hin weitgehend leer, so dass es in kurzer Zeit von selbst austrocknet. Außerdem ist es mit einem Sprühdesinfektionsmittel leicht desinfizierbar und leicht von innen abflammbar. Des weiteren kann ein Sterilstopfen die Kontamination verhindern bzw. das Austrocknen fördern.

Die Erfindung betrifft ferner eine Anordnung zur Entnahme einer Probe mit dem erfindungsgemäßen Probe-Entnahmeventil, wobei in den Ventilkörper der Adapter eingesetzt und mit dem Kupplungsstück befestigt ist. Bei dieser Anordnung wird ein Schlauch mit einem Anschluss-Stutzen des Adapters verbunden und führt zu einem Ventil, von dem ein weiterer Schlauch zu einem 2-Wege-Ventil führt, an das zwei Schläuche angeschlossen sind, von denen einer zu einem Probe-Behälter und der andere zu einem Spülbehälter führt.

Mit dieser Anordnung kann zunächst das Probe-Entnahmeventil in seinem geöffneten Zustand mit entnommener Probe-Flüssigkeit gespült werden, die von dem 2-Wege-Ventil in einen Spülbehälter abgeführt wird. Danach wird das 2-Wege-Ventil umgeschaltet, so dass anschließend entnommene Probe-Flüssigkeit in den Probe-Behälter gelangt, um auf ihren Zustand untersucht zu werden.

Um das Probe-Entnahmeventil mit einer externen Spülflüssigkeit oder Desinfektionsflüssigkeit spülen bzw. reinigen zu können, kann außerdem das oben zuerst genannte Ventil ebenfalls als 2-Wege-Ventil ausgebildet sein, von dem ein weiterer Schlauch zu einem Behälter mit Spülflüssigkeit oder Desinfektionsflüssigkeit führt. Dieser Behälter kann als Faltenbalg ausgebildet sein. Durch Ausüben von Druck auf diesen Behälter kann die Spülflüssigkeit oder Desinfektionsflüssigkeit durch den Adapter hindurch ins Innere des Ventilkörpers gefördert werden, wobei sie durch einen mit einem Rohrstutzen des Kupplungsstücks verbundenen Schlauch zu dem Spülbehälter abläuft.

Alle Schläuche, zugehörige Ventile und Behälter oder Beutel sind nach einem weiteren Vorschlag der Erfindung als Wegwerf-Artikel oder Einmal-Artikel vorgesehen.

Weitere Merkmale, Vorteile und Einzelheiten der Erfindung ergeben sich aus der nachfolgenden Beschreibung und den beigefügten Zeichnungen. Dabei zeigen:
- Figur 1: einen Vertikalschnitt durch eine erste Ausführungsform des Probe-Entnahmeventils;
- Figur 2: einen Vertikalschnitt durch eine zweite Ausführungsform des Probe-Entnahmeventils;
- Figuren 3A und 3B: das Probe-Entnahmeventil gemäß Figur 1 mit Adapter und Kupplungsstück in einem Vertikalschnitt und einem Horizontalschnitt und
- Figur 4: die Anordnung gemäß Figur 3 mit Behältern und Schlauchleitungen.

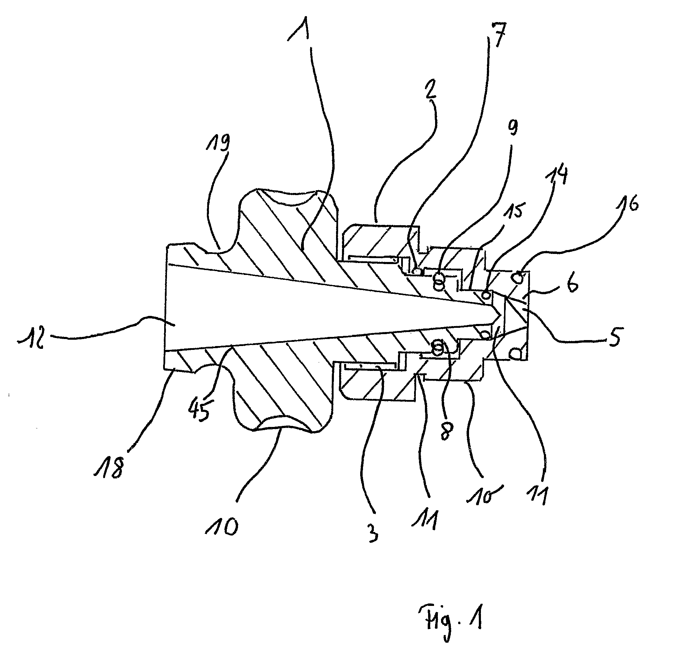

Bei der in Figur 1 dargestellten Ausführungsform des Probe-Entnahmeventils steht ein Ventilkörper 1 im Gewindeeingriff mit einem Ventilgehäuse 2, wozu der Ventilkörper 1 mit einem Außengewinde versehen ist, das in ein entsprechendes Innengewinde des Ventilgehäuses 2 (bei 3) eingreift. In der geschlossenen Stellung des Ventils ist ein konischer Endabschnitt 5 des Ventilkörpers 1 fest gegen einen entsprechend geformten Ventilsitz 6 des Ventilgehäuses 2 gepresst, wodurch ein wasserdichter Verschluss entsteht. Ein radial innerer Vorsprung 7 des Gehäuses 2 bildet zusammen mit einem in eine äußere Nut 8 des Ventilkörpers 1 eingesetzten, überstehenden Ring 9 eine Herausdrehsicherung für den Ventilkörper 1. Gedreht wird der Ventilkörper 1 mittels eines angeformten Drehgriffs 10.

Der Ventilkörper 1 enthält im Bereich des konischen Endabschnitts 5 eine durchgehende Querbohrung 11, in die eine konische Auslaufbohrung 12 einmündet, die sich zu dem freien Ende 13 des Ventilkörpers 1 hin erweitert. Die Querbohrung 11 besteht bevorzugt aus zwei im Winkel zueinander verlaufenden Bohrungsabschnitten, die in der Schließstellung des Ventils schräg nach unten auf die Auslaufbohrung 12 zu verlaufen (obwohl dies in Figur 1 nicht zu sehen ist).

Der Ventilkörper 1 ist mittels einer Ringdichtung 14 gegenüber einem zylindrischen Wandabschnitt 15 des Gehäuses 2 abgedichtet, wobei die Ringdichtung 14 dicht hinter der Querbohrung 11 angeordnet ist, so dass in der Öffnungsstellung des Ventils hier praktisch kein Totraum entsteht. Die beispielsweise aus einer die Flüssigkeit führenden Leitung entnommene Probeflüssigkeit gelangt somit nur bis in den Bereich der seitlichen Öffnungen der Querbohrung 11, wenn das Ventil geöffnet ist.

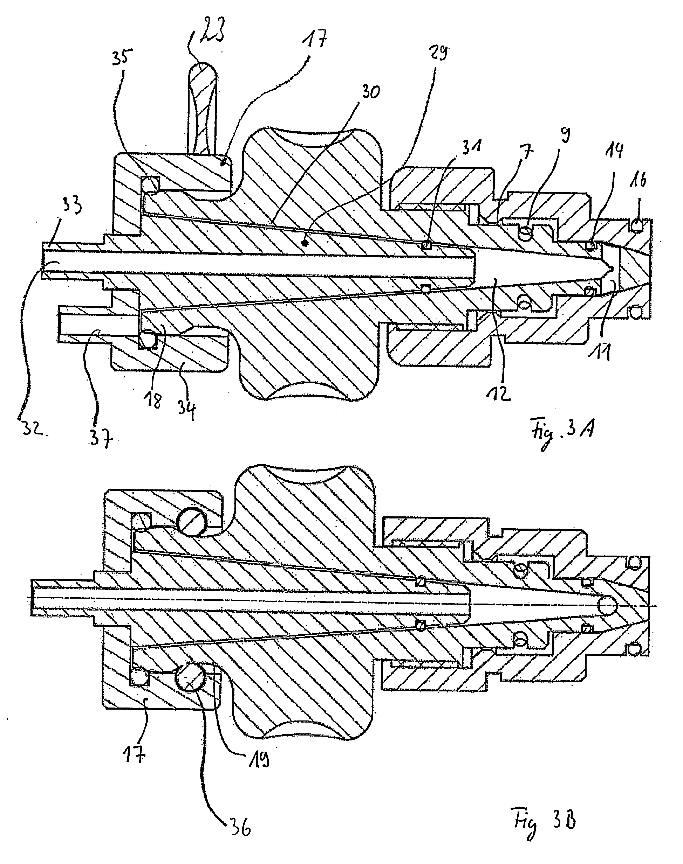

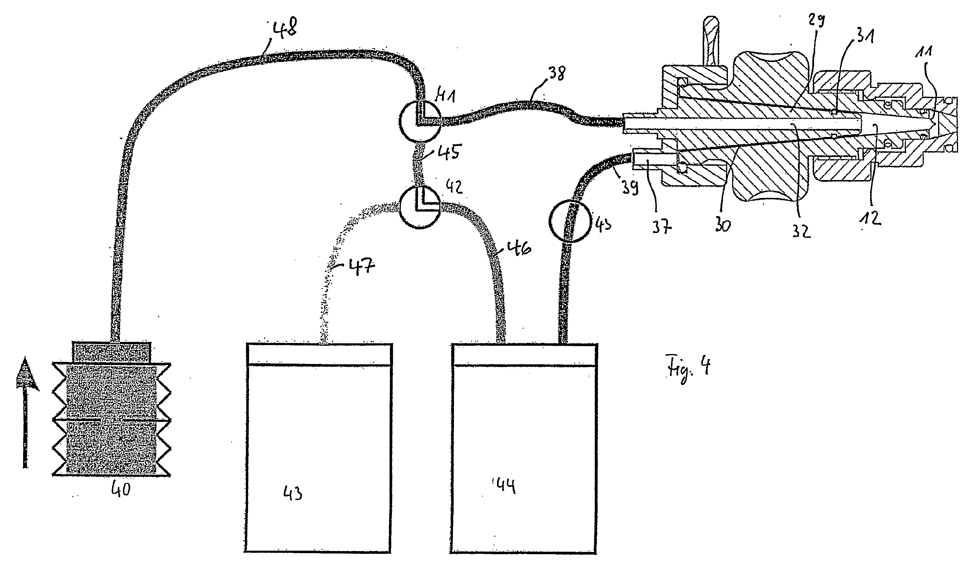

Das Gehäuse 2 hat zudem eine äußere Ringdichtung 16 zum flüssigkeitsdichten Einsetzen in eine Bohrung in der Wand einer Leitung oder eines Behälters. Der Ventilkörper 1 hat zum Anschluss eines in den Figuren 3 und 4 dargestellten Kupplungsstücks 17 einen Ventilnippel 18, der von dem Drehgriff 10 durch eine umlaufende Nut 19 getrennt ist.

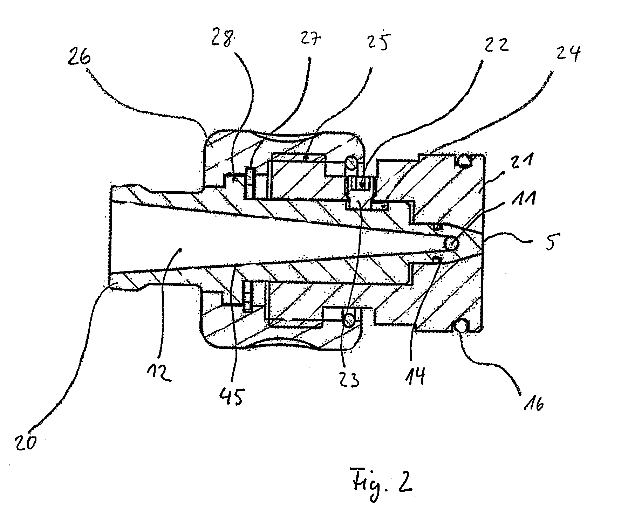

Bei der in Figur 2 dargestellten Ausführungsform ist der Ventilkörper 20 nicht-drehbar in dem Ventilgehäuse 21, jedoch gegenüber diesem in Längsrichtung verschieblich angeordnet. Hierzu durchgreift eine Schraube 22 eine Durchgangsbohrung des Gehäuses 21 und greift mit ihrem Schaft 23 in eine in Richtung der Längsachse des Ventilkörpers 20 verlaufende Nut 24 ein. Durch diesen Eingriff ist der Bewegungsbereich des Ventilkörpers 20 in dem Gehäuse 21 begrenzt.
Eine Überwurfmutter 26 sitzt drehbar auf dem Ventilkörper 20 und steht (bei 25) im Gewindeeingriff mit einem Außengewinde des Gehäuses 21. Die Überwurfmutter 26 ist über einen Ring 27 und einem Mitnehmer 28 des Ventilkörpers 20 zur gemeinsamen axialen Bewegung mit dem Ventilkörper 20 verbunden.

Durch Drehen der Überwurfmutter 26 wird somit der Ventilkörper 20 zwischen der Öffnungsstellung des Ventils und dessen Schließstellung hin- und her bewegt.

Bei der in den Figuren 3A, 3B und 4 dargestellten Anordnung ist ein Adapter 29 in die Auslaufbohrung 12 eingesetzt, wobei ein kleiner Ringspalt 30 zwischen der Wand der Auslaufbohrung 12 und dem Adapter 29 verbleibt. Bei einer Probe-Entnahme mit eingesetztem Adapter 29 ist dieser Spalt 30 durch eine in eine Umfangsnut des Adapters 29 eingesetzte Ringdichtung 31 verschlossen.

Durch den Adapter 29 führt eine zylindrische Bohrung 32 hindurch, die in einem Anschluss-Stutzen 33 des Adapters 29 endet.

Der Adapter 29 wird in seiner Einbaulage von einem Kupplungsstück 17 gehalten, das mit einem zylindrischen Abschnitt 34 den Ventilnippel 18 umfasst. Eine Ringdichtung 35 sorgt für einen wasserdichten Anschluss. Das Kupplungsstück 17 ist mittels einer U-förmigen Klammer 36 in der Nut 19 befestigt, wobei die Klammer 36 entsprechende Durchgangsbohrungen des Kupplungsstücks 17 durchgreift.

An dem Kupplungsstück 17 ist ein Rohrstutzen 37 angeformt, der mit dem Ringspalt 30 in Verbindung steht.

Wie Figur 4 zeigt, können an den Rohrstutzen 33 und 37 Schläuche 38 und 39 angebracht werden. Durch den Schlauch 38 kann eine Spülflüssigkeit oder eine Desinfektionsflüssigkeit aus einem Faltenbalg-Behälter 40 in das Probe-Entnahmeventil eingeführt werden, wobei der notwendige Druck durch das Zusammenpressen des Faltenbalg-Behälters 40 hervorgerufen wird. In der Leitung 38 ist ein Spül- und Entnahmeleitungsventil 41 eingeschaltet, das im Falle einer Probe-Entnahme die entnommene Flüssigkeitsprobe über ein weiteres Ventil 42 in einen Probe-Behälter 43 leitet.

Im Falle eines Spül- oder Desinfektionsvorgangs wird die äußere Ringdichtung 31 des Adapters 29 entfernt, so dass die durch die Bohrung 32 des Adapters 29 in die anschließende Auslaufbohrung 12 und die Querbohrung(en) 11 eingeführte Flüssigkeit durch den Ringspalt 30 und den Spülanschluss 37, den damit verbundenen Schlauch 39 und durch ein Spülleitungsventil 43 in einen Spülbehälter/Desinfektionsmittelbehälter 44 abläuft.

Es wird betont, dass die Erfindung nicht auf die beschriebenen und dargestellten Ausführungsformen beschränkt ist.

## Patentansprüche

1. Probe-Entnahmeventil für eine wässerige Flüssigkeit, mit einem Ventilkörper (1,20), der in einem Ventilgehäuse (2,21) zwischen einer Schließstellung und einer Offnungsstellung des Probe-Entnahmeventils bewegbar ist,
wobei der Ventilkörper (1,20) eine zu dem freien Ende (13) hin sich erweiternde Auslaufbohrung (12) aufweist,
**dadurch gekennzeichnet,**
**dass** die Auslaufbohrung (12) in dem Ventilkörper (1, 20) bis zu einer Querbohrung (11) verläuft, in die die Auslaufbohrung (12) einmündet, durch die eine zu entnehmende Probe der wassrigen Flüssigkeit in die Auslaufbohrung (12) eintreten kann, und
**dass** sich die Auslaufbohrung (12) von der Einmündung in der Querbohrung (11) an kontinuierlich bis zu dem freien Ende des Ventilkörpers (1,20) hin erweitert, wobei in der Einbaulage des Ventilkörpers (1,20) der untere Rand (45) der Auslaufbohrung (12) zum freien Ende (13) hin nach unten abfallend verläuft.

2. Probe-Entnahmeventil nach Anspruch 1,
**dadurch gekennzeichnet,**
**dass** die Auslaufbohrung eine Trichterform oder Trompetenform hat.

3. Probe-Entnahmeventil nach Anspruch 1 oder 2,
**dadurch gekennzeichnet,**
**dass** der Ventilkörper (1) drehbar in dem Ventilgehäuse (2) angeordnet ist.

4. Probe-Entnahmeventil nach Anspruch 1 oder 2,
**dadurch gekennzeichnet,**
**dass** der Ventilkörper (20) nicht-drehbar, jedoch in Richtung seiner Längsachse verschieblich in dem Ventilgehäuse (21) angeordnet ist.

5. Probe-Entnahmeventil nach einem der Ansprüche 1 bis 4,
**dadurch gekennzeichnet,**
**dass** das Ventilgehäuse (2,21) mit einem Außengewinde versehen ist, mit dem das Ventilgehäuse (2,21) in eine Gewindeöffnung in der Wand einer eine Flüssigkeit führenden Leitung oder eines eine Flüssigkeit enthaltenden Behälters einschraubbar ist.

6. Probe-Entnahmeventil nach einem der Ansprüche 1 bis 4,
**dadurch gekennzeichnet,**
**dass** das Ventilgehäuse durch einen blockförmigen Leitungsabschnitt gebildet ist, der in eine die Flüssigkeit führende Leitung eingeschaltet ist.

7. Probe-Entnahmeventil nach einem der Ansprüche 1 bis 6,
ferner **gekennzeichnet durch**
einen Adapter (29), der in die Auslaufbohrung (12) einsetzbar ist und eine Durchgangsbohrung (32) enthält, die mit einer Anschlussleitung (38) verbindbar ist.

8. Probe-Entnahmeventil nach Anspruch 7,
**dadurch gekennzeichnet,**
**dass** der Adapter (29) in der in die Auslaufbohrung (12) eingesetzten Lage durch ein Kupplungsstück (17) an dem Ventilkörper (1) befestigt ist.

9. Probe-Entnahmeventil nach Anspruch 8,
**dadurch gekennzeichnet,**
**dass** das Kupplungsstück (17) mit einem Spülanschluss (37) versehen ist, der mit einem Ringspalt (30) zwischen der Auslaufbohrung (12) und dem Adapter (29) in Verbindung steht.

10. Anordnung zur Entnahme einer Probe, mit einem Probe-Entnahmeventil nach Anspruch 7,
**dadurch gekennzeichnet,**
**dass** die Anschlussleitung (38) mit einem Anschluss-Stutzen (33) des Adapters (29) und einem Ventil (41) verbunden ist, von dem ein weiterer Schlauch (145) zu einem 2-Wege-Ventil (42) führt, von dem zwei Schläuche (46,47) zu einem Probe-Behälter (43) und zu einem Spülbehälter (44) führen.

11. Anordnung nach Anspruch 10,
**dadurch gekennzeichnet,**
**dass** auch das Ventil (41) ein 2-Wege-Ventil ist, von dem ein weiterer Schlauch (48) zu einem Behälter (40) mit Spülflüssigkeit oder Desinfektionsflüssigkeit führt.

12. Anordnung nach Anspruch 11,
**dadurch gekennzeichnet,**
**dass** der Behälter (40) als Faltenbalg-Behälter ausgebildet ist.

13. Anordnung nach einem der Ansprüche 10 bis 12,
**dadurch gekennzeichnet,**
**dass** ein Schlauch (39) mit dem Spülanschluss (37) des Kupplungsstücks (17) verbunden ist, wobei der Schlauch (39) zu dem Spülbehälter (44) führt.

14. Anordnung nach einem der Ansprüche 10 bis 13,
**dadurch gekennzeichnet,**
**dass** die Schläuche (38,39,45,46,47,48) und die Behälter (40,43,44) Wegwerf-Artikel sind.

## Claims

1. A sample extraction valve for an aqueous liquid with a valve body (1, 10), which is movable in a valve housing (2, 21) between a closed position and an open position of the sample extraction valve, wherein the valve body (1, 20) has an outlet bore (12), which widens towards the free end (13), **characterised in that** the outlet bore (12) extends in the valve body (1, 20) to a transverse bore (4, 11), with which the outlet bore (12) communicates, through which a sample of the aqueous liquid to be extracted can enter into the outlet bore (12) and that the outlet bore (12) widens from the communication with the transverse bore (11) continuously to the free end of the valve body (1, 20) wherein, in the installed position of the valve body (1, 20), the lower edge (45) of the outlet bore (12) extends sloping downwardly towards the free end (13).

2. A sample extraction valve as claimed in claim 1, **characterised in that** the outlet bore has a funnel shape or a trumpet shape.

3. A sample extraction valve as claimed in claim 1 or 2, **characterised in that** the valve body (1) is rotatably arranged in the valve housing (2).

4. A sample extraction valve as claimed in claim 1 or 2, **characterised in that** the valve body (20) is arranged non-rotatably but movably in the direction of its longitudinal axis within the valve housing (21).

5. A sample extraction valve as claimed in one of claims 1 to 4, **characterised in that** the valve housing (2, 21) is provided with an external screw thread, with which the valve housing (2, 21) may be screwed into a threaded opening in the wall of a conduit conducting a liquid or a container containing a liquid.

6. A sample extraction valve as claimed in one of claims 1 to 4, **characterised in that** the valve housing is constituted by a block-shaped conduit section, which is connected into a conduit conducting the liquid.

7. A sample extraction valve as claimed in one of claims 1 to 6, further **characterised by** an adapter (29), which is insertable into the outlet bore (12) and includes a passage (32), which is connectable to a connecting conduit (38).

8. A sample extraction valve as claimed in claim 7, **characterised in that** the adapter (29) is fastened to the valve body (1) in the position in which it is inserted into the outlet bore (12) by means of a coupling member (17).

9. A sample extraction valve as claimed in claim 8, **characterised in that** the coupling member (17) is provided with a flushing connection (37), which is in communication with an annular gap (30) between the outlet bore (12) and the adapter (29).

10. An assembly for extracting a sample with a sample extraction valve as claimed in claim 7, **characterised in that** the connecting conduit (38) is connected to a connecting fitting (33) on the adapter (29) and a valve (41), from which a further hose (145) leads to a 2-way valve (42), from which two hoses (46, 47) lead to a sample container (43) and to a flushing container (44).

11. An assembly as claimed in claim 10, **characterised in that** the valve (41) is also a 2-way valve, from which a further hose (48) leads to a container (40) with flushing liquid or disinfection liquid.

12. An assembly as claimed in claim 11, **characterised in that** the container (40) is constructed in the form of a concertina type container.

13. An assembly as claimed in one of claims 10 to 12, **characterised in that** a hose (39) is connected to the flushing connector (37) of the coupling member (17) whereby the hose (39) leads to the flushing container (44).

14. An assembly as claimed in one of claims 10 to 13, **characterised in that** the hoses (38, 39, 45, 46, 47, 48) and the containers (40, 43, 44) are disposable articles.

## Revendications

1. Soupape de prélèvement d'échantillon pour un liquide aqueux, avec un corps de soupape (1, 20) qui est mobile dans un logement de soupape (2, 21) entre une position de fermeture et une position d'ouverture de la soupape de prélèvement d'échantillon,
dans laquelle le corps de soupape (1, 20) présente un alésage d'écoulement s'élargissant à l'extrémité libre (13),
**caractérisée en ce que** :
l'alésage d'écoulement (12) évolue dans le corps de soupape (1, 20) jusqu'à un alésage transversal (11) dans lequel l'alésage d'écoulement (12) débouche, par lequel un échantillon à prélever du liquide aqueux peut entrer dans l'alésage d'écoulement (12) et **en ce que** l'alésage d'écoulement (12) s'élargit de façon continue de l'embouchure de l'alésage transversal (11) jusqu'à l'extrémité libre du corps de soupape (1, 20), dans laquelle dans la position de montage du corps de soupape (1, 20), le bord inférieur (45) de l'alésage d'écoulement (12) évolue jusqu'à l'extrémité libre (13) en allant vers le bas.

2. Soupape de prélèvement d'échantillon selon la revendication 1,
**caractérisée en ce que** :
l'alésage d'écoulement a une forme en entonnoir ou une forme en trompette.

3. Soupape de prélèvement d'échantillon selon la revendication 1 ou 2,
**caractérisée en ce que** :
le corps de soupape (1) est disposé de façon à pouvoir tourner dans le boîtier de soupape (2).

4. Soupape de prélèvement d'échantillon selon la revendication 1 ou 2,
**caractérisée en ce que** :
le corps de soupape (20) n'est pas disposé de façon à pouvoir tourner mais est disposé en direction de son axe longitudinal de façon à coulisser dans le boîtier de soupape (21).

5. Soupape de prélèvement d'échantillon selon l'une des revendications 1 à 4,
**caractérisée en ce que** :
le boîtier de soupape (2, 21) est doté d'un filetage externe avec lequel le boîtier de soupape (2, 21) peut être vissé dans une ouverture de filetage dans la paroi d'une conduite acheminant un liquide ou d'un récipient contenant un liquide.

6. Soupape de prélèvement d'échantillon selon l'une des revendications 1 à 4,
**caractérisée en ce que** :
le boîtier de soupape est formé par un segment de conduite formant un bloc qui est branché dans une conduite conduisant le liquide.

7. Soupape de prélèvement d'échantillon selon l'une des revendications 1 à 6,
**caractérisée en outre par** :
un adaptateur (29) qui peut être inséré dans l'alésage d'écoulement (12) et contient un alésage traversant (32) qui peut être relié à une conduite de raccordement (38).

8. Soupape de prélèvement d'échantillon selon la revendication 7,
**caractérisée en ce que** :
l'adaptateur (29) est fixé dans la position utilisée dans l'alésage d'écoulement (12) par une pièce de couplage (17) sur le corps de soupape (1).

9. Soupape de prélèvement d'échantillon selon la revendication 8,
**caractérisée en ce que** :
la pièce de couplage (17) est dotée d'un raccord de rinçage (37) qui est en relation avec une fente annulaire (30) entre l'alésage d'écoulement (12) et l'adaptateur (29).

10. Dispositif de prélèvement d'un échantillon, avec une soupape de prélèvement d'échantillon selon la revendication 7,
**caractérisé en ce que** :
la conduite de raccordement (38) est reliée à une prise (33) de l'adaptateur (29) et à une soupape (41) de laquelle conduit un autre tuyau (145) jusqu'à une soupape bidirectionnelle (42) de laquelle deux tuyaux (46, 47) conduisent jusqu'à un récipient d'échantillon (43) et à un récipient de rinçage (44).

11. Dispositif selon la revendication 10, **caractérisé en ce que** :
la soupape (41) est également une soupape bidirectionnelle de laquelle un autre tuyau (48) conduit à un récipient (40) avec un liquide de rinçage ou un liquide de désinfection.

12. Dispositif selon la revendication 11,
**caractérisé en ce que** :
le récipient (40) est formé comme un récipient à soufflets.

13. Dispositif selon l'une des revendications 10 à 12,
**caractérisé en ce que** :
un tuyau (39) est relié au raccordement de rinçage (37) de la pièce de couplage (17), le tuyau (39) conduisant au récipient de rinçage (44).

14. Dispositif selon l'une des revendications 10 à 13,
**caractérisé en ce que** :
les tuyaux (38, 39, 45, 46, 47, 48) et les récipients (40, 43, 44) sont des articles à usage unique.
